Europäisches Patentamt

European Patent Office

Office européen des brevets

(19)

(11) Veröffentlichungsnummer: **0 103 744**
**B1**

(12) # EUROPÄISCHE PATENTSCHRIFT

(45) Veröffentlichungstag der Patentschrift:
15.10.86

(21) Anmeldenummer: 83108059.3

(22) Anmeldetag: 16.08.83

(51) Int. Cl.⁴: **F 16 K  11/06,** F 16 K  11/18,
F 16 K  31/60

(54) Hebelkopf für Einhebel-Mischventile.

(30) Priorität: 19.08.82  DE 3230815

(43) Veröffentlichungstag der Anmeldung:
28.03.84 Patentblatt 84/13

(45) Bekanntmachung des Hinweises auf die Patenterteilung:
15.10.86 Patentblatt 86/42

(84) Benannte Vertragsstaaten:
AT BE CH DE FR GB IT LI NL SE

(56) Entgegenhaltungen:
EP-A-0 096 005
FR-A-2 301 756
FR-A-2 415 769

(73) Patentinhaber: FRIEDRICH GROHE
ARMATURENFABRIK GmbH & CO, Hauptstrasse
137, D-5870 Hemer 1 (DE)

(72) Erfinder: Pawelzik, Manfred, Herringser Weg 5a,
D-4770 Soest (DE)
Erfinder: Herring, William Peter, Unter dem
Asenberg 30, D-5870 Hemer 1 (DE)
Erfinder: Kostorz, Jan Ryszard, Frhr.von Dücker
Strasse 2a, D-5750 Menden 2 (DE)

## Beschbreibung

Die Erfindung betrifft einen Hebelkopf für Einhebel-Mischventile des Sanitärbereichs mit den im Oberbegriff des Anspruchs 1 angegebenen Merkmalen.

Eine Hebelkopfausbildung dieser Gattung ist aus der DE—C—26 68 022 bekannt. Bei dem zugehörigen Mischventil ist das Mischungsverhältnis und die Durchflußmenge mit dem in zwei Freiheitsgraden beweglich angeordneten Handhebel bestimmbar. Das Mischungsverhältnis wird dabei durch Drehung des Hebelkopfes bzw. Verschwenken des Handhebels um die Mittelachse des Hebelkopfes, während durch Auf- und Abschwenken des Handhebels parallel zur Mittelachse die Gesamtdurchflußmenge bestimmt wird. Durch diese Zuordnung der beiden Freiheitsgrade des Handhebels kann es bei der Ventilbetätigung zu unerwünschten Überlagerungen der beiden Stellbewegungen kommen. Bei einer Stellbewegung zur Änderung der Durchflußmenge kann leicht der Hebelkopf zusätzlich verschwengt werden, so daß neben der erwünschten Durchflußmengenänderung noch eine unerwünschte Änderung des Mischungsverhältnisses mit eingestellt wird. Auch kann bei einer Änderung des Mischungsverhältnisses in unerwünschter Weise leicht die eingestellte Durchflußmenge mit verändert werden.

Außerdem ist aus der FR—A—2 415 769 ein Hebelkopf bekannt, bei dem die beiden Stellbewegungen voneinander getrennt durchführbar sind. Bei dieser Einrichtung ist jedoch ein zusätzlicher Hebel zwischen dem Ventilschieber und dem Handhebel erforderlich, so daß die Einrichtung relativ groß baut. Auch dürfte aufgrund der hintereinander angeordnete, im Normalfall ein Spiel aufweisenden Gelenkverbindungen zwischen dem Handhebel und dem Ventilschieber ein feinfühliges Einstellen des Ventils problematisch sein.

Der Erfindung liegt die Aufgabe zugrunde, einen Hebelkopf für das im Oberbegriff des Anspruchs 1 angegebene Mischventil zu schaffen, mit dem eine ungewollte Überlagerung der beiden Ventilstellgrößen durch den in zwei Freiheitsgraden bewegbaren Handhebel weitgehend ausgeschlossen ist, wobei es mit zur Aufgabe gehört, den Hebelkopf so zu gestalten, daß die Ventilstellgrößen feinfühlig und komfortabel mit dem Handhebel erzeugt werden können.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 15 angegeben.

Die mit der Erfindung erzielbaren Vorteile bestehen insbesondere darin, daß der im Gehäuse befindliche Bereich des Handhebels einen Kugelkopf trägt, der mit seiner als Kugelzone ausgebildeten Mantelfläche in einem Kopfstück des Flachschiebers gelagert ist, so daß hierdurch eine verschleißarme Einleitung der axialen Stellgröße ermöglicht wird. Der Kugelkopf ist hierbei mit einem Gleitschuh in einer parallel zur Schwenkachse ausgebildeten Gleitführung des Schwenkhebels gelagert, wobei die in dem Schwenkhebel drehbar gelagerte Spindel mit einem Zahnrad in einen entsprechend gestalteten Querschlitz des Kugelkopfes hineingeführt ist und das Zahnrad mit einer im Grund des Querschlitzes angeordneten Zahnstange zusammenwirkt, so daß durch eine Spindeldrehung eine radiale Stell- oder Schwenkbewegung des Flachschiebers erzeugt wird. Vorteilhaft kann auf der Spindel ein elliptisches Zahnrad mit einer entsprechend gestalteten Zahnstange vorgesehen werden. Mit dieser besonderen Ausbildung kann erreicht werden, daß im mittleren Stellbereich für das Mischungsverhältnis von Kalt- und Warmwasser, dem sogenannten Komfortbereich, in dem Mischwasser von der Temperatur von ca. 30 bis 45˙ Celsius in dem Ventil erzeugt werden soll, die Stellgröße am Ventilschieber relativ zum Drehwinkel vermindert bzw. unterproportional abgegeben wird, während sie in den Endbereichen, wo nur Kalt- oder Heißwasser gezapft wird, verstärkt oder überproportional zugeführt wird und so in dem Komfortbereich noch eine feinfühligere Abstimmung bzw. Einstellung des Mischwassers ermöglicht wird.

Zur sicheren Halterung des Kugelkopfes an dem Handhebel kann zweckmäßig die Spindel durch den Querschlitz im Kugelkopf hindurchgeführt werden und auf der gegenüberliegenden Seite mit einem Kulissenstein als Widerlager versehen werden, der einerseits in dem Querschlitz und andererseits in einem am Gehäuse ausgebildeten Längsschlitz geführt wird, wobei zur spielfreien Axialsicherung der Kulissenstein auf der Spindel von einem Federglied mit einem Anschlagbund gegen den Kugelkopf gepresst wird.

Vorteilhaft kann für die in dem Schwenkhebel gelagerte Spindel zwischen Schwenkhebel und Stellgriff ein Reibmittel, z.B. O-Ring oder spiralförmig ausgebildete Blattfedern, vorgesehen werden, wodurch die Stellkräfte für die beiden unterschiedlichen Stellbewegungen einander angepaßt werden können, so daß eine gleichmaßige und harmonische Betätigung des Mischventils in beiden Stellbewegungsarten gewährleistet werden kann.

Zur guten Stellungsanzeige des Ventils können auf dem Gehäuse und/oder dem Schwenkhebel sowie dem Stellgriff Markierungen und/oder Skalen angeordnet werden.

Ein Ausführungsbeispiel der Erfindung ist in der Zeichnung dargestellt und wird im folgenden näher beschrieben. Es zeigt

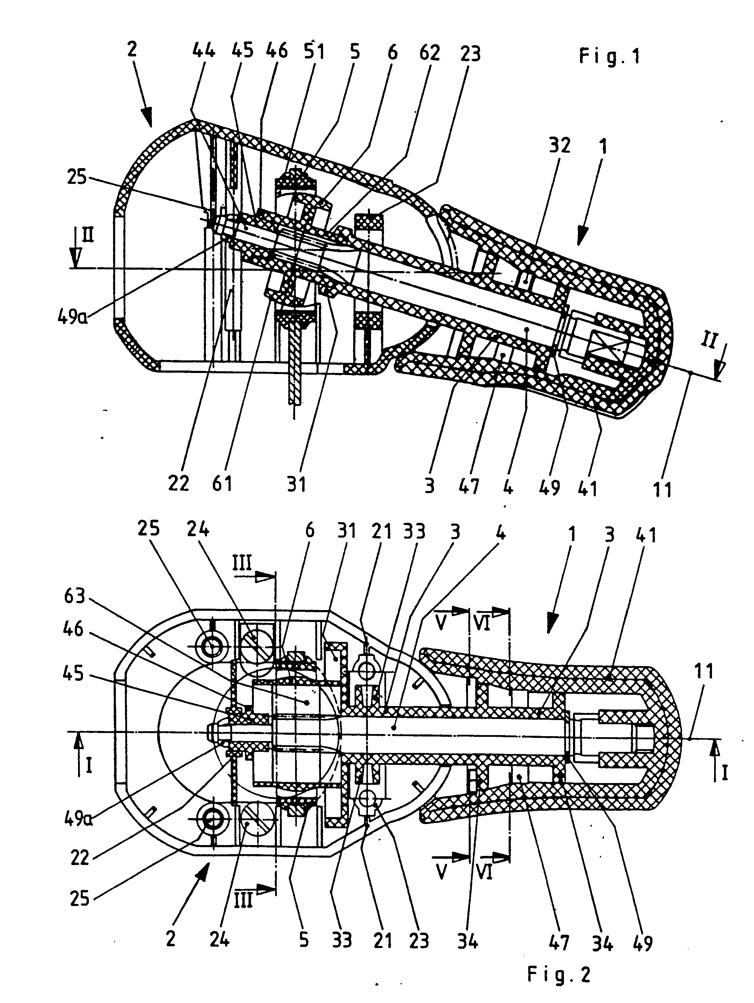

Figur 1 einen Hebelkopf für ein sanitäres Flachschiebermischventil, geschnitten in der Ebene I gemäß Figur 2;

Figur 2 einen Schnitt des Hebelkopfs mit waagerecht gestelltem Handhebel nach Figur 1 auf der Schnittebene II;

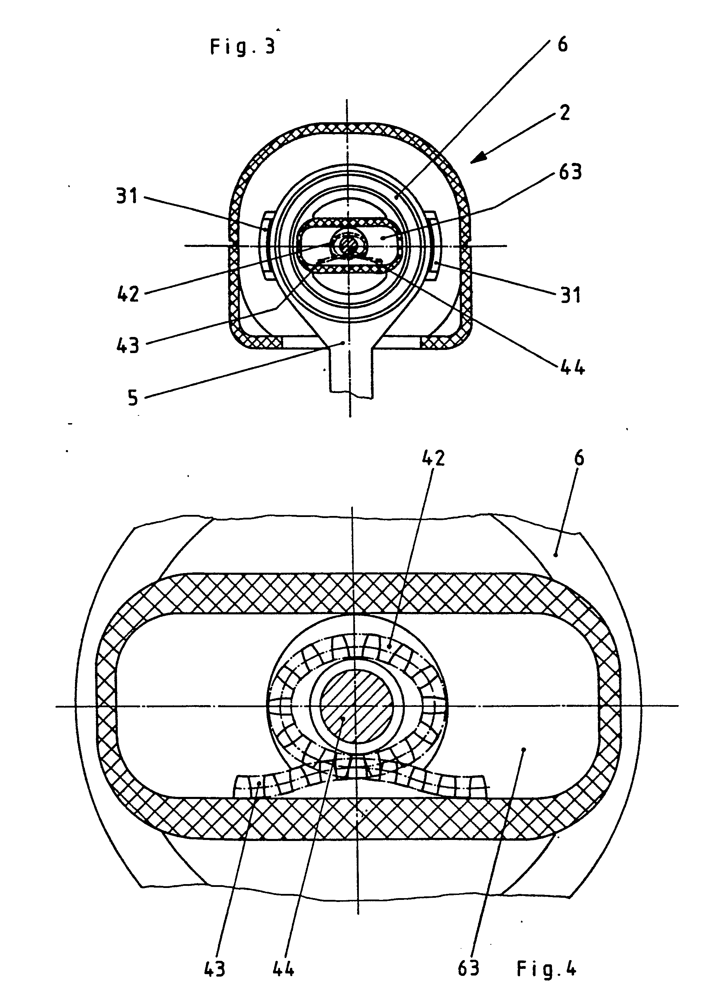

Figur 3 einen Schnitt des Hebelkopfs nach Figur 2 auf der Schnittebene III;

Figur 4 einen vergrößerten Ausschnitt der Figur 3 bezüglich des Zahnradgetriebes;

Figur 5 einen Schnitt des Hebelkopfes nach Figur 2 auf der Schnittebene V;

Figur 6 einen Schnitt des Hebelkopfes nach Figur 2 auf der Ebene VI.

Der in der Zeichnung dargestellte Hebelkopf ist insbesondere für sanitäre Mischventile geeignet, bei denen ein Flachschieber vorgesehen ist, der mittels axialer Stellbewegung die Gesamtdurchflußmenge und durch eine radiale Stellgröße das Mischungsverhältnis des zuströmenden kalten und warmen Wassers reguliert, wie er beispielsweise in der DE—PS 26 58 022 gezeigt ist.

Der Hebelkopf wird im wesentlichen von einem aus einem Gehäuse 2 herausgeführten Handhebel 1 gebildet, an dessen im Gehäuse 2 befindlichen Endbereich ein Kugelkopf 6 angeordnet ist, der mittels verschiedener Gleitführungen verschiebbar zwischen dem Handhebel 1 und einem Kopfstück 5 des Ventilschiebers gehaltert ist. Der Handhebel 1 wird von einem im Gehäuse 2 auf einer Schwenkachse 21 gelagerten Schwenkhebel 3 und einer in dem Schwenkhebel 3 gelagerten Spindel 4 gebildet. Am äußeren vorstehenden Ende der Spindel 4 ist ein haubenförmiger Stellgriff 41 in bekannter Weise befestigt und umfaßt mit seiner Mantelfläche im vorstehenden Bereich des Schwenkhebels 3, wobei zur sicheren Drehführung auf dem Schwenkhebel 3 Stützlager 34 vorgesehen sind. Die dem Gehäuse zugekehrte Stirnseite ist einem halbkugelförmig gestalteten Gehäuseteil angepaßt und gewährleistet einen harmonischen Übergang in jeder Schwenkstellung des Schwenkhebels 3 vom Stellgriff 41 auf das Gehäuse 2.

Das Gehäuse 2 ist zweiteilig, nämlich von einer Grundschale und einer Abdeckschale gebildet, wobei die Grundschale mit Schrauben 24 an dem Mischventil befestigt wird. An der Grundschale ist ein teilbares Lager 23 ausgebildet, in dem der Schwenkhebel 3 und Radialzapfen 33 eingelagert wird und somit um die Schwenkachse 21 verschwenkbar gehaltert ist.

Am inneren Endbereich des Schwenkhebels 3 ist eine Gleitführung 31 parallel zur Schwenkachse 21 ausgebildet, in die der Kugelkopf 6 mit einem Gleitschuh 62 einfaßt und eine Verbindung herstellt. Der Kugelkopf 6 ist andererseits mit seiner kugelzonenförmigen Mantelfläche 61 in einer in dem Kopfstück 5 in einer Bohrung verschiebbar gelagerten Kugelpfanne 51 gehaltert, so daß bei einer Schwenkbewegung des Schwenkhebels 3 um die Schwenkachse 21 ein in dem Gehäuse 2 angeordneter innerer Hebelarm eine entsprechende axiale Stellgröße in das Kopfstück 5 einleitet, während die radiale Komponente durch die verschiebbare Kugelpfanne 51 kompensiert wird.

Die in dem Schwenkhebel 3 drehbar gelagerte Spindel 4 ist mit einem Zapfen 44 durch einen im Kugelkopf 6 ausgebildeten Querschlitz 63 hindurchgeführt und trägt auf seinem Endbereich einen Kulissenstein 45, der einerseits in dem Querschlitz 63 und andererseits in einem senkrecht zum Querschlitz angeordneten Längsschlitz 22 im Gehäuse 2 geführt ist. Der Kulissenstein 45 ist mit einem Anschlagbund 46 zur Anlage an dem Kugelkopf 6 versehen. Zur sicheren axialen Halterung der Spindel 4 und des Kugelkopfes 6 mit seinem Kulissenteil 45 ist die Spindel 4 am Austrittsbereich des Schwenkhebels 3 mit einem Sprengring 49 und am im Gehäuse befindlichen Ende mit einem Federelement 49a gesichert.

Auf der Spindel 4 im Bereich des Querschlitzes 63 ist ein eliptisches Zahnrad 42 ausgebildet, das mit einer im Grund des Querschlitzes 63 ausgebildeten und entsprechend geformten Zahnstange 43 zusammenwirkt.

Der vorstehend dargestellte Hebelkopf hat folgende Wirkungsweise:

Bei einem Verschwenken des Handhebels 1 um die Schwenkachse 21 wird die tangentiale Komponente der Schwenkbewegung als axiale Stellgröße über den Kugelkopf 6 und der Kugelpfanne 51 in das Kopfstück 5 des Ventilschiebers eingeleitet, wodurch in der Schwenkrichtung die Durchflußmenge vergrößert oder verkleinert bzw. das Mischventil geöffnet oder abgesperrt wird. Die bei der Schwenkbewegung auftretende Radialbewegung wird unschädlich durch die verschiebbar im Kopfstück 5 gelagerte Kugelpfanne 51 kompensiert.

Bei einer Drehung des Stellgriffs 41 und mit ihm der Spindel 4 um ihre Längsachse 11 wird über das Zahnrad 42 und der Zahnstange 43 in Abhängigkeit von der Drehrichtung der Kugelkopf 6 in der parallel zur Schwenkachse ausgebildeten Gleitführung 31 des Schwenkhebels 3 und zum in dem Querschlitz 63 befindlichen Teil des Kulissensteins 45 parallel zur Schwenkachse 21 verschoben, so daß nunmehr das Kopfstück 5 mit dem zugehörigen Ventilschieber entsprechend verschwenkt wird und somit das Mischungsverhältnis des zufließenden kalten und warmen Wassers geändert wird, während die Gesamtdurchflußmenge etwa konstant bleibt. Da das Kopfstück 5 des Ventilschiebers um einen Drehpunkt verschwenkt wird, wäre eigentlich eine entsprechend bogenförmig ausgebildete Gleitführung 31 und ein entsprechend gestalteter Querschlitz 63 erforderlich. Versuche haben jedoch gezeigt, daß bei gerade ausgebildeten Gleitführungen die axial auf den Schieber wirksam werdende Komponente vernachlässigbar gering ist und bogenförmige Gleitführungen daher in den meisten Anwendungsfällen nicht erforderlich sind.

Durch die eliptische Ausbildung des Zahnrads 42 wird erreicht, daß in dem bevorzugten mittleren Mischbereich ein kleineres Übersetzungsverhältnis erzielt wird, so daß in diesem Bereich relativ zur Ventilschieberbewegung ein größerer Drehwinkel am Stellgriff 41 aufgebracht werden muß, während in den Endbereichsstellungen des Ventilschiebers, in denen im wesentlichen nur heißes oder nur kaltes Wasser gezapft wird, das Übersetzungsverhältnis vergrößert ist, so daß in einem relativ kleinen Drehwinkel am Stellgriff 41 eine relativ große Stellbewegung am Ventilschieber erzeugt wird.

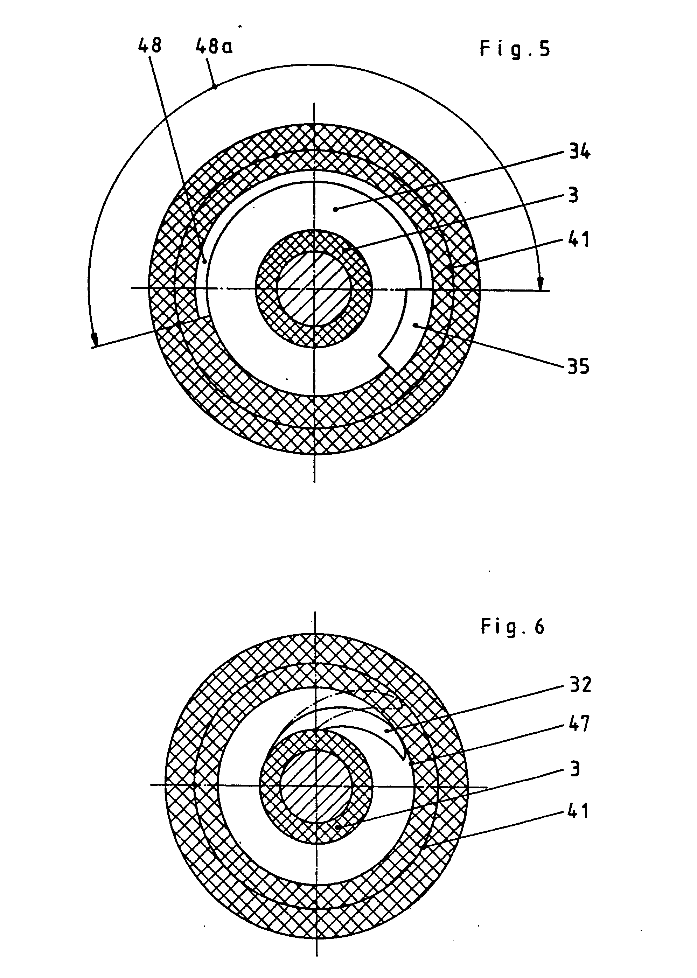

Zur Anpassung und Vergleichmäßigung der beiden Stellbewegungen, nämlich Schwenken um die Schwenkachse 21 zur Mengenregulierung und Verdrehen des Stellgriffs 41 um die Längsachse 11 zur Regulierung des Mischungsverhältnisses, ist der Stellgriff 41 mit einer an der Mantelfläche des Schwenkhebels 3 ausgebildeten Blattfeder 32 versehen, die an einer inneren Mantelfläche 47 des Stellgriffs 41 angepreßt wird und somit der Drehbewegung eine erwünschte bestimmte Schwergängigkeit im Hinblick auf die Schwenkbewegung verleiht, so daß für die beiden getrennten Stellbewegungen etwa gleiche Kräfte erforderlich sind. Außerdem ist auf einem Stützlager 34 des Schwenkhebels 3 ein Anschlag 35 ausgebildet, der in einer ringförmigen Ausnehmung 48 im Stellgriff 41, wie insbesondere der Figur 5 zu entnehmen ist, zusammenwirkt und den maximalen Drehwinkel 48a z.B. auf 205 begrenzt.

Schließlich sei erwähnt, daß in besonders kostengünstiger Weise das Gehäuse 2 und viele Einzelteile des Hebelkopfes aus Kunststoff im Spritzgußverfahren hergestellt werden können. Die Abdeckschale des Gehäuses 2 wird dabei zweckmäßig mittels Schnappverbindungen 25 an der Grundschale befestigt.

**Patentansprüche**

1. Hebelkopf für Einhebel-Mischventile des Sanitärbereichs mit einem zur Regulierung des Mischungsverhältnisses und der Auslaufmenge radial verschwenk- und axial verschiebbaren Ventilschieber, der einerseits von einem verschiebbaren Drehpunkt im Ventil geführt und andererseits mit einem Kopfstück (5) an einem im Gehäuse (2) verschwenkbar gelagerten Handhebel (1) angelenkt ist, wobei der im Gehäuse (2) des Hebelkopfs befindliche Bereich des Handhebels (1) mit einem Kugelkopf (6) in das Kopfstück (5) einfaßt, dadurch gekennzeichnet, daß der Handhebel (1) von einem verschwenkbar am Gehäuse (2) gehalterten Schwenkhebel (3) mit einer in ihm drehbar gelagerten, einen Stellgriff (41) tragenden Spindel (4) gebildet ist, derart, daß die Schwenkbewegung des Schwenkhebels (3) mit einem im Gehäuse (2) befindlichen Hebelarm unmittelbar als axiale Stellgröße in das Kopfstück (5) des Ventilschiebers eingeleitet ist, wobei der Kugelkopf (6) mit einem Gleitschuh (62) in einer etwa parallel zur Schwenkachse (21) ausgebildeten Gleitführung (31) des Schwenkhebels (3) geführt und in dem Kugelkopf (6) parallel zu den Gleitflächen des Gleitschuhs (62) ein Querschlitz (63) ausgebildet ist, in dem einer Zahnstange (43) angeordnet ist, mit der ein auf der Spindel (4) angeordnetes Zahnrad (42) zusammenwirkt, derart, daß die Drehbewegung der Spindel (4) in eine radiale Bewegung des Ventilschiebers umgeformt wird.

2. Hebelkopf nach Anspruch 3, dadurch gekennzeichnet, daß das Zahnrad elliptisch und die Zahnstange (43) im Grund des Querschlitzes (63) dementsprechend gebildet sind.

3. Hebelkopf nach wenigstens einem der Ansprüche 1 oder 2, dadurch gekennzeichnet, daß die Spindel (4) mit einem Zapfen (44) durch den Querschlitz (63) hindurchgeführt ist und einen Kulissenstein (45) trägt, der einerseits im Querschlitz (63) und andererseits in einem am Gehäuse (2) ausgebildeten Längsschlitz (22) geführt ist.

4. Hebelkopf nach Anspruch 3, dadurch gekennzeichnet, daß der Kulissenstein (45) einen Anschlagbund (46) für den Kugelkopf (6) mit Gleitschuh (62) hat und Mittel zu seiner Axialsicherung auf der Spindel (4) vorgesehen sind.

5. Hebelkopf nach wenigstens einem der Ansprüche 1 bis 4, dadurch gekennzeichnet, daß zur Erzeugung einer bestimmten Schwergängigkeit der Spindel (4) zwischen Schwenkhebel (3) und Stellgriff (41) ein Reibmittel vorgesehen ist.

6. Hebelkopf nach wenigstens einem der Ansprüche 1 bis 5, dadurch gekennzeichnet, daß der Stellgriff (41) als Haubengriff ausgebildet ist und den aus dem Gehäuse (2) vorstehenden Teil des Schwenkhebels (3) umfaßt.

7. Hebelkopf nach Anspruch 5, dadurch gekennzeichnet, daß als Reibmittel ein O-Ring vorgesehen ist.

8. Hebelkopf nach den Ansprüchen 5 und 6, dadurch gekennzeichnet, daß als Reibmittel eine oder mehrere an dem Schwenkhebel (3) ausgebildete spiralförmige Blattfedern (32) vorgesehen sind, die an inneren Mantelflächen (47) des als Haubengriff ausgebildeten Stellgriffs (41) anliegen.

9. Hebelkopf nach Anspruch 1, dadurch gekennzeichnet, daß im Übergangsbereich von Stellgriff (41) und Schwenkhebel (3) Markierungen und/oder eine Skala zur Anzeige des Mischungsverhältnisses bzw. der Mischwassertemperatur angeordnet sind.

10. Hebelkopf nach Anspruch 6, dadurch gekennzeichnet, daß im Übergangsbereich des haubenförmigen Stellgriffs (41) und des Gehäuses (2) Markierungen und/oder Skalen zur Ventilstellungsanzeige vorgesehen sind.

11. Hebelkopf nach Anspruch 6, dadurch gekennzeichnet, daß auf dem Schwenkhebel (3) Stützlager (34) zur sicheren Führung und Anschläge (35) zur Drehbegrenzung des Stellgriffs (41) ausgebildet sind.

12. Hebelkopf nach Anspruch 1, dadurch gekennzeichnet, daß die Schwenkachse (21) von einem in der Wandung des Gehäuses (2) angeordneten Lagers gebildet ist.

13. Hebelkopf nach Anspruch 1, dadurch gekennzeichnet, daß die Schwenkachse (21) von einem gesondert im Gehäuse (2) angeordneten, von zusammenfügbaren Halbschalen geformten Lager (23) gebildet ist und der Schwenkhebel (3) mit Radialzapfen (33) in dem Lager (23) geführt ist.

14. Hebelkopf nach Anspruch 13, dadurch gekennzeichnet, daß das Gehäuse (2) im Bereich des Lagers (23) halbkugelförmig gestaltet ist,

wobei der Kugelmittelpunkt im Schnittpunkt der Achsen im Lager (23) liegt und der Stellgriff (41) mit seiner Haube an diesen Bereich herangeführt ist.

15. Hebelkopf nach wenigstens einem der Ansprüche 1 bis 14, dadurch gekennzeichnet, daß das Gehäuse (2) von einer Grundschale und einer Abdeckschale gebildet ist, wobei die Grundschale im wesentlichen die Lager und Führungsmittel des Hebelkopfes trägt und an dem Ventil, z.B. mit Schrauben (24), befestigt ist, während die Abdeckschale die Grundschale im wesentlichen verschließt und z.B. mit Schnappverbindungen (25) an der Grundschale gehaltert ist.

## Revendications

1. Tête à levier pour boisseauxmélangeurs à un levier pour des applications sanitaires, comportant un tiroir de boisseau basculant radialement et coulissant axialement pour régler le rapport de mélange et le débit, tiroir qui est d'une part guidé dans le boisseau par un point de rotation coulissant et qui est d'autre part articulé par une tête (5) sur un levier à main (1) monté basculant dans le boîtier (2), la zone du levier à main (1) qui se trouve au niveau du boîtier (2) de la tête à levier, pénètre par une tête sphérique (6) dans la tête (5), caractérisée en ce que le levier (1) est formé par un levier basculant (3) monté basculant dans le boîtier (2) et portant une broche (4) munie d'une poignée de réglage (41) et logée en rotation dans le levier de façon que le mouvement de basculement du levier basculant (3) soit engagé dans la tête (5) du tiroir de boisseau directement comme grandeur de réglage axiale par l'intermédiaire d'un bras de levier à l'intérieur du boîtier (2), la tête sphérique (6) étant guidée par un patin de coulissement (62) dans un guidage de coulissement (31) du levier basculant (3), sensiblement parallèle à l'axe de basculement (21) et la tête sphérique (6) comporte une fente transversale (63) parallèle aux surfaces de glissement du ptain (62), fente qui comporte une crémaillère (43) avec laquelle coopère un pignon denté (42) monté sur la broche (4) de façon à transformer le mouvement de rotation de la broche (4) en un mouvement radial du tiroir de boisseau.

2. Tête à levier selon la revendication 1, caractérisée en ce que le pignon denté et la crémaillère (43) sont réalisés de façon correspondante à la base de la fente transversale (63).

3. Tête à levier selon au moins l'une des revendications 1 ou 2, caractérisée en ce que la broche (4) traverse la fente transversale (63) qar un goujon (44) et porte un galet de coulissement (45) guidé d'une part dans la fente transversale (63) et d'autre part dans une fente longitudinale (22) réalisée dans le boîtier (2).

4. Tête à levier selon la revendication 3, caractérisée en ce que le galet de coulissement (45) comporte un collet de butée (46) pour la tête sphérique (6) avec patin (62) et des moyens sont prévus pour son blocage axial sur la broche (4).

5. Tête à levier selon au moins l'une quelconque des revendications 1 à 4, caractérisée en ce que pour rendre le mouvement de la broche (4) plus difficile, il est prévu un moyen de friction entre le levier basculant (3) et la poignée de réglage (41).

6. Tête à levier selon au moins l'une des revendications 1 à 5, caractérisée en ce que la poignée de réglage (41) est une poignée creuse entourant la partie du levier oscillant (3) en saillie du boîtier (2).

7. Tête à levier selon la revendication 5, caractérisée en ce que le moyen de friction est une bague torique.

8. Tête à levier selon les revendications 5 et 6, caractérisée en ce que le moyen de friction est constitué par un ou plusieurs ressortslames (32) en spiral sur le levier basculant (3), ressorts s'appuyant contre la surface-enveloppe intérieure (47) de la poignée de réglage (41) réalisée comme poignée creuse.

9. Tête à levier selon la revendication 1, caractérisée en ce que des repères et/ou une échelle indiquant le rapport de mélange ou la température de l'eau mélangée sont prévus dans la zone de transition de la poignée de réglage (41) et du levier basculant (3).

10. Tête à levier selon la revendication 6, caractérisée en ce que dans la zone transitoire de la poignée de réglage (41), creuse et du boîtier (2), il est prévu des repères et/ou des graduations pour indiquer la position de réglage du boisseau.

11. Tête à levier selon la revendication 6, caractérisée en ce que des paliers d'appui (34) pour guider de façon certaine et des butées (35) pour limiter le mouvement de rotation de la poignée de réglage (41) sont prévus sur le levier basculant (3).

12. Tête à levier selon la revendication 1, caractérisée en ce que l'axe de basculement (21) est formé par un palier réalisé dans la paroi du boîtier (2).

13. Tête à levier selon la revendication 1, caractérisée en ce que l'axe de basculement (21) est formé par un palier (23) constitué par des demi-coquilles susceptibles d'être réunies, montées de façon particulière dans le boîtier (2), et le levier basculant (3) est guidé dans le palier (23) par des goujons radiaux (33).

14. Tête à levier selon la revendication 13, caractérisée en ce que le boîtier (2) est de forme hémisphérique au niveau du palier (23), le centre de la sphère étant l'intersection des axes du palier (23) et la poignée de réglage (41) est guidée par sa partie supérieure dans cette zone.

15. Tête à levier selon l'une des revendications 1 à 14, caractérisée en ce que le boîtier (2) est formé par une coquille de base et par une coquille de recouvrement, la coquille de base portant essentiellement les paliers et les moyens de guidage de la tête à levier et est fixée au boisseau par exemple par des vis (24) alors que la coquille de recouvrement ferme principalement la coquille de base et est maintenue sur la coquille de base par exemple par des liaisons à encliquetage (25).

## Claims

1. Lever head for single-lever mixing valves for sanitary purposes having a radially pivotable and axially displaceable valve slide for regulating the mixing ratio and the outflow rate, which valve slide is on the one hand guided in the valve by a movable fulcrum and on the other coupled by means of a head piece (5) to a hand lever (1) pivotally mounted in the housing (2), the part of the hand lever (1) that is in the housing (2) of the lever head having a spherical head (6) that engages the head piece (5), characterised in that the hand lever (1) is formed in such a manner by a pivot lever (3) held pivotally on the housing (2) and a spindle (4) carrying an adjusting handle (41) and mounted rotatably in the pivot lever that the pivotal movement of the pivot lever (3) is introduced directly, in the form of an axial adjusting variable, into the head piece (5) of the valve slide by a lever arm in the housing (2), the spherical head (6) and a sliding block (62) being guided in a slide guide (31), which is approximately parallel to the pivot axis (21), in the pivot lever (3) and, in the spherical head (6), parallel to the sliding surfaces of the sliding block (62), a transverse slot (63) is made in which there is arranged a toothed rack (43) with which a gearwheel (42) arranged on the spindle (4) cooperates in such a manner that the rotary movement of the spindle (4) is converted into a radial movement of the valve slide.

2. Lever head according to claim 1, characterised in that the gearwheel is formed eliptically and the toothed rack (43) is formed accordingly in the base of the transverse slot (63).

3. Lever head according to at least one of claims 1 and 2, characterised in that the spindle (4) has a peg (44) that passes through the transverse slot (63) and carries a link block (45) which is guided on the one hand in the transverse slot (63) and on the other in a longitudinal slot (22) formed in the housing (2).

4. Lever head according to claim 3, characterised in that the link block (45) has a stop collar (46) for the spherical head (6) and the guide shoe (62) and that means are provided for securing it axially on the spindle (4).

5. Lever head according to at least one of claims 1 to 4, characterised in that in order to produce a certain tightness of the spindle (4) a friction means is provided between the pivot lever (3) and the adjusting handle (41).

6. Lever head according to at least one of claims 1 to 5, characterised in that the adjusting handle (41) is designed as a hood-like handle and fits round that part of the pivot lever that projects out of the housing (2).

7. Lever head according to claim 5, characterised in that an O-ring is provided as the friction means.

8. Lever head according to claims 5 and 6, characterised in that there are provided as the friction means one or more spiral leaf springs (32) that are formed on the pivot lever (3) and rest against the inside surfaces (47) of the adjusting handle (41) which is designed as a hood-like handle.

9. Lever head according to claim 1, characterised in that in the region of transition from the adjusting handle (41) to the pivot lever (3) marks and/or a scale is/are arranged to indicate the mixing ratio and/or the temperature of the mixed water.

10. Lever head according to claim 6, characterised in that in the region of transition from the hood-like adjusting handle (41) to the housing (2) marks and/or scales are provided to indicate the valve position.

11. Lever head according to claim 6, characterised in that formed on the pivot lever (3) are support bearings (34) for secure guiding and stops (35) to limit the rotation of the adjusting handle (41).

12. Lever head according to claim 1, characterised in that the pivot axis (21) is formed by a bearing located in the wall of the housing (2).

13. Lever head according to claim 1, characterised in that the pivot axis (21) is formed by a bearing (23), formed by half-shells that can be fitted together, which is arranged separately in the housing (2) and that the pivot lever (3) is guided in the bearing (23) by radial pegs (33).

14. Lever head according to claim 13, characterised in that the housing (2) is shaped like half a sphere in the region of the bearing (23), the centre of the sphere being at the point at which the axes cross in the bearing (23) and the hood of the adjusting handle (41) being attached to this region.

15. Lever head according to at least one of claims 1 to 14, characterised in that the housing (2) is formed by a base shell and a cover shell, the base shell carrying substantially the bearings and the guide means for the lever head and being secured to the valve, for example by screws (24), while the cover shell substantially closes off the base shell and is held on the base shell, for example by means of snap connections (25).

Fig. 1

Fig. 2

**Fig. 3**

**Fig. 4**

Fig.5

48   48a

34
3
41

35

Fig.6

32
47
3
41